# EUROPÄISCHE PATENTSCHRIFT

(11) **EP 4 017 777 B1**
(45) Veröffentlichungstag und Bekanntmachung des Hinweises auf die Patenterteilung: **02.08.2023**
(21) Anmeldenummer: 20763982.4
(22) Anmeldetag: 18.08.2020
(51) Int. Cl.: B61D 27/00

(54) **KLIMAANLAGE FÜR EIN SCHIENENFAHRZEUG (MIT LUFT- ODER DRUCKDICHTER KANALAUSBILDUNG IN DER LUFTBEHANDLUNGSSEKTION)**
AIR-CONDITIONING SYSTEM FOR A RAIL VEHICLE (HAVING AIR-TIGHT OR PRESSURE-TIGHT DUCTING IN THE AIR TREATMENT SECTION)
INSTALLATION DE CLIMATISATION POUR UN VÉHICULE FERROVIAIRE (À CONFIGURATION DE CONDUIT ÉTANCHE À L'AIR ET À LA PRESSION DANS LA PARTIE TRAITEMENT DE L'AIR)

(30) Priorität: 27.08.2019 DE 202019104698 U
(43) Veröffentlichungstag der Anmeldung: 29.06.2022
(73) Patentinhaber: Faiveley Transport Leipzig GmbH & Co. KG, 04435 Schkeuditz (DE)
(72) Erfinder: BOECK, Lutz, 04435 Schkeuditz (DE); POSER, Steffen, 04509 Krostitz (DE); HOFFMANN, Erik, 04451 Borsdorf (DE); FISCHER, Kai, 04178 Leipzig (DE)
(74) Vertreter: Laufhütte, Dieter
(86) Internationale Anmeldenummer: PCT/DE2020/100718
(87) Internationale Veröffentlichungsnummer: WO 2021/037309

(56) Entgegenhaltungen:
- EP-A1- 1 010 599
- WO-A1-02/24478
- WO-A1-2013/037335
- US-A- 5 605 055

## Beschreibung

### HINTERGRUND

### Technisches Gebiet

Der hierin beschriebene Gegenstand betrifft eine Klimaanlage für ein Schienenfahrzeug, wobei die Klimaanlage für brennbare Kältemittel geeignet und als ein kompaktes Gerät für eine Montage auf einem Fahrzeugdach ausgestaltet ist und mindestens Gerätesektionen für eine Luftbehandlung und eine Verdichter-Verflüssiger-Einheit und optional Gerätesektionen für Fortluft, einen elektrischen Schaltkasten und/oder Schalldämpfer aufweist.

### Stand der Technik

Für Klimaanlagen in Fahrzeugen sind verschiedene Kältemittel bekannt, wobei insbesondere für die synthetischen Kältemittel die Verwendung unter ökologischen Aspekten problematisch ist. So wurde für Kraftfahrzeuge und auch für Schienenfahrzeuge das Kältemittel R134a sehr umfangreich eingesetzt. Allerdings wirkt dieses Kältemittel bei einem Austritt in die Atmosphäre als Treibhausgas. Deshalb wurde der Einsatz von Kältemittel R134a für PKW-Neufahrzeuge in der Europäischen Union zum 01-January-2017 beendet.

Als Alternative für R134a wird nunmehr überwiegend das Kältemittel R1234yf verwendet, das einen wesentlich geringeren Treibhauseffekt besitzt, allerdings brennbar ist und als A2L- Kältemittel klassifiziert ist. Doch auch der Einsatz dieses Kältemittels wird inzwischen von Fachleuten kritisiert. So entsteht bei der Freisetzung in Verbindung mit Temperaturen 〉 250°C hoch giftige Flusssäure (HF) und in der Atmosphäre als Abbauprodukt persistente Trifluoressigsäure (TFA), die sich insbesondere im Wasser anreichert. Aufgrund der damit verbundenen Risiken wird grundsätzlich auch ein Verzicht auf HFO- Kältemittel wie R1234yf angestrebt.

Eine Alternative dazu ist die Verwendung von Kohlenstoffdioxid (R744) als ein natürliches Kältemittel. Allerdings ergibt die Anwendung von R744 aufgrund der hohen Systemdrücke im Vergleich zu anderen Kältemitteln eine relativ aufwändige Gerätetechnik. Auch ist bei hohen Umgebungstemperaturen eine signifikante Verschlechterung der Leistungszahl (COP) zu verzeichnen und daher ein deutlicher Anstieg des Energiebedarfs für die Klimatisierung. Außerdem kommt es bei steigenden Umgebungstemperaturen zu einer starken Reduktion der Kälteleistung, dem durch eine entsprechend größere Dimensionierung der Komponenten begegnet werden kann.

Somit ist offenkundig, dass die bisher eingesetzten Kältemittel letztlich einen Kompromiss zwischen unterschiedlichen funktionellen, umweltrelevanten und sicherheitstechnischen Anforderungen darstellen. Es besteht ein Bedarf an der Nutzung von Kältemitteln für Fahrzeugklimaanlagen, insbesondere auch für Schienenfahrzeuge, die ökologisch unkritisch beim Austritt an die Atmosphäre sind, eine hohe Energieeffizienz über den gesamten Arbeitsbereich aufweisen und den Wissens- und Erfahrungsstand der bisher verwendeten Kaltdampftechnologie weiternutzen können. Dabei sind diese Anlagen bei Schienenfahrzeugen überwiegend als kompakte Anlagen für das Fahrzeugdach konstruiert. Derartige Klimakompaktgeräte weisen unabhängig von ihrer jeweils konkreten Konstruktion typischerweise die Gerätesektionen Luftbehandlung und Verdichter-Verflüssiger-Einheit auf, und können optional die Gerätesektionen Fortluft, elektrischer Schaltkasten und/oder Schalldämpfer beinhalten.

Als Lösung der oben beschriebenen Anforderungen sind brennbare Kohlenwasserstoffe wie z.B. Propan (R290), Propylen (R1270) oder Isobutan (R600a) als alternative Kältemittel interessant. Diese Kältemittel sind bei direktverdampfenden Anlagen mit begrenzten Füllmengen (〈150g bzw. 〈500g) vor allem im stationären Bereich weit verbreitetet. Bei der Notwendigkeit größerer Füllmengen zur Erzeugung größerer Kälteleistungen werden aufgrund ihrer Brennbarkeit vorzugsweise indirekte Systeme ausgeführt.

Für eine Klimatisierung von Schienenfahrzeugen werden brennbare Kältemittel aufgrund der damit verbundenen Explosions- und Brandgefahr bisher kaum eingesetzt - weder als direkt noch als indirekt verdampfendes System. Bei einem indirekt verdampfenden System wird das o.g. Risiko reduziert, indem die Klimaanlage mit Sekundärkreislaufsystemen ausgeführt wird. Dabei wird in einem Primärkreislauf, der außerhalb des Fahrzeuges angeordnet ist und damit keine direkte Verbindung zum Fahrzeuginnenraum aufweist, die benötigte Kälte- (bzw. Heiz-) Leistung unter Verwendung brennbarer Kältemittel in üblichen Kompressionskältekreisläufen bereitgestellt. Diese Kälteleistung wird durch Wärmeübertrager (vorzugsweise Platten-Wärmeübertrager) auf einen Sekundärkreislauf übertragen, der zum Beispiel als Solekreislauf mit Wasser-Glykol-Gemischen ausgeführt ist.

Eine diesbezügliche technische Lösung ist aus WO 2018 / 137 908 A1 bekannt. Demzufolge weist ein Schienenfahrzeug einen primären Kältemittelkreislauf auf, der außerhalb vom Fahrzeug angeordnet und vom Fahrgastraum vollständig baulich getrennt ist. Ein sekundärer Kälteträgerkreislauf ist zumindest teilweise innerhalb des Schienenfahrzeuges angeordnet. Der Wärmeaustausch zwischen dem primären Kältemittelkreislauf und dem sekundären Kälteträgerkreislauf erfolgt durch einen Zwischenwärmetauscher, der unterflur im Außenbereich angeordnet ist. Dadurch wird der primäre Kältemittelkreislauf vollständig außerhalb vom Innenraum des Schienenfahrzeuges geführt. Durch diese Ausgestaltung sind die Sicherheitsbetrachtungen beim Einsatz brennbarer Stoffe im Wesentlichen für den Außenbereich durchzuführen, der Innenbereich kann als gleich sicher wie bei konventionellen Systemen angesetzt werden. Damit können auch solche Kältemittel verwendet werden, die aus sicherheitsrelevanten Aspekten bisher kaum zur Klimatisierung von Fahrgasträumen eingesetzt werden. Deshalb wird in WO 2018 / 137 908 A1 eine Verwendung brennbarer Kältemittel wie Propan vorgeschlagen, das unter funktionellen Aspekten gut als Kältemittel geeignet ist, wegen der oben erläuterten Probleme der Brand- und Explosionsgefahr bisher allerdings kaum verwendet wird.

Unter Beachtung des Standes der Technik gemäß WO 2018 / 137 908 A1 und ähnlicher Lösungsvorschläge ist zu erwarten, dass sich die Akzeptanz für eine Verwendung von brennbaren Kältemitteln in Klimaanlagen für Schienenfahrzeuge mittelfristig stark erhöhen wird. Dabei ist jedoch zu beachten, dass durch den indirekten Kreislauf energetische Nachteile aufgrund der thermischen Verluste im Zwischenwärmeübertrager und ein Mehrgewicht sowie die Notwendigkeit für zusätzlichen Bauraum bestehen bleiben. Für die umfassende Nutzung brennbarer Kältemittel wird daher ein direktverdampfendes System angestrebt, das diese Nachteile vermeidet. Um den Brand- und Explosionsschutz auch bei möglichen Betriebsstörungen mit hoher Sicherheit gewährleisten zu können, sind daher weitere bauliche Maßnahmen an den Klimaanlagen von Schienenfahrzeugen ggf. erforderlich, die zu spezifischen Ausgestaltungen an verschiedenen Baugruppen führen.

Ein diesbezüglicher Lösungsansatz ist aus DE 195 22 099 A1 bekannt, die eine Anordnung von Ventilatoren und anderen Bauteilen in druckdichten Kammern beschreibt. Weiterhin wird in DE 93 19 874 U1 vorgeschlagen, dass mehrere Baugruppen im Kältekreislauf einer Klimaanlage in einer druckdichten Struktur vollhermetisch abgeschottet werden, um unkontrollierte Austritte von Kältemittel zu vermeiden. Dieser Ansatz ist für den Fachmann grundsätzlich interessant. Allerdings vermitteln beide Druckschriften keine Anregung, wie die abstrakte Idee konkret umgesetzt werden kann. Außerdem sind sie in der beschriebenen Form nicht für brennbare Kältemittel geeignet.

### AUFGABE DER ERFINDUNG

Aufgabe des erfindungsgemäßen Gegenstands ist es, ein direktverdampfendes System zu realisieren, bei dem die zu klimatisierende Luft für den Passagierbereich derart innerhalb der Klimaanlage abgeschottet wird, dass bei Leckagen an kältemittelführenden Baugruppen der Eintrag von brennbaren Kältemittel in den Innenraum des Fahrzeuges ausgeschlossen ist.

Diese Aufgabe wird gelöst, indem die kältemittelführenden Baugruppen und Bauteile außerhalb von den Bereichen der Komfortluftführung in einem separaten Gehäuse sowie offen zur Umgebung angeordnet sind. Demzufolge sind die Komponenten des Luftbehandlers, wie z.B. Mischluftklappen für Außenluft / Umluft, Luftfilter, Klappen, Zuluftventilator, Verdampfer und Heizregister sowie deren Schnittstellen zur Außenluftansaugung und/oder zur Umluftansaugung und zur Zuluftausblasung innerhalb einer luftabgedichteten und/oder druckdicht ausgeführten Kanalführung im Gehäuse des kompakten Gerätes bzw. ausgestalteten Klimaanlage angeordnet. Alle Komponenten außerhalb der Kanalführung sind offen zur Umgebung ausgeführt, so dass eventuell auftretende Leckagen nach außen abgelüftet bzw. abgeleitet werden.

Somit ist die Komfortluftführung, d.h., die den Passagieren im Fahrzeug zuzuführende Luft, im Gerät separiert und gegenüber dem Kältekreislauf hermetisiert, wobei die kältemitteltechnischen Teile als ein üblicher und bekannter hermetischer Kältekreislauf ausgeführt sind. Eine Neuheit gegenüber dem bekannten Stand der Technik besteht folglich darin, dass alle kältemittelführenden Teile außerhalb der Komfortluftführung liegen und in einem Gehäuse angeordnet sind, so dass sie gegen Beschädigungen oder versehentliche Zugriffe geschützt sind. Dabei sind die kältemittelführenden Teile zur Umgebung offen angeordnet, um durch eine passive Belüftung eventuell auftretende Leckagen nach außen abzuführen und zündfähige Konzentrationen über einen längeren Zeitraum zu verhindern. Sofern keine potentiellen Zündquellen vorhanden sind, können die kältemittelführenden Teile auch in einem separaten geschlossenen, nicht luftdichten Bereich angeordnet werden. Weiterhin erfolgt zur Verhinderung des Eindringens von Kältemittel in den Bereich der Komfortluftführung eine entsprechende Abdichtung (technisch dicht) zwischen den beiden Bereichen von Komfortluftführung und Gehäuse mit kältemittelführenden Komponenten. Weitere vorteilhafte Ausgestaltungen sind Gegenstand von Unteransprüchen, deren technische Merkmale in einem Ausführungsbeispiel beschrieben werden.

Mit der technischen Lösung gemäß des erfindungsgemäßen Gegenstands werden die für die Luftbehandlung funktionswesentlichen Baugruppen einer Klimaanlage für ein Schienenfahrzeug derart abgeschottet, dass durch eine luft- und/oder druckdichte Kanalausbildung ein Kontakt dieser Baugruppen mit brennbaren Kältemitteln infolge Leckagen verhindert wird. Dadurch wird die Akzeptanz für eine Verwendung von brennbaren Kältemitteln in Klimaanlagen für Schienenfahrzeuge erhöht. Denn nunmehr ist es möglich, den Brand- und Explosionsschutz auch bei einem unkontrollierten Austritt des brennbaren Kältemittels im Außenbereich für den innenliegenden Bereich zu gewährleisten.

### BESCHREIBUNG DER ZEICHNUNGEN

Nachfolgend wird ein Ausführungsbeispiel des erfindungsgemäßen Gegenstands unter Bezugnahme auf die Zeichnungen näher erläutert. Es zeigen in jeweils stilisierter Darstellung:
Fig. 1 den grundsätzlichen Aufbau einer Klimaanlage für ein Schienenfahrzeug, die für brennbare Kältemittel geeignet ist und als ein kompaktes Gerät für eine Montage auf dem Fahrzeugdach ausgestaltet ist, hier ohne Darstellung des Gehäuses der Klimaanlage;
Fig. 2 eine erste Ausführung zur Anordnung von Baugruppen der Klimaanlage innerhalb einer luftdichten Kanalführung;
Fig. 3 eine zweite Ausführung zur Anordnung von Baugruppen der Klimaanlage innerhalb einer druckdichten Kanalführung;
Fig. 4 eine dritte Ausführung zur Anordnung von Baugruppen der Klimaanlage innerhalb einer luftdichten Kanalführung;
Fig. 5 eine vierte Ausführung zur Anordnung von Baugruppen der Klimaanlage innerhalb einer druckdichten Kanalführung; und
Fig. 6 ein Beispiel für eine konkrete Ausführung der kältemittelführenden Leitungsabschnitte des Verdampfers bei luftdichten oder druckdichten Kanalausbildungen.

### DETAILIERTE BESCHREIBUNG

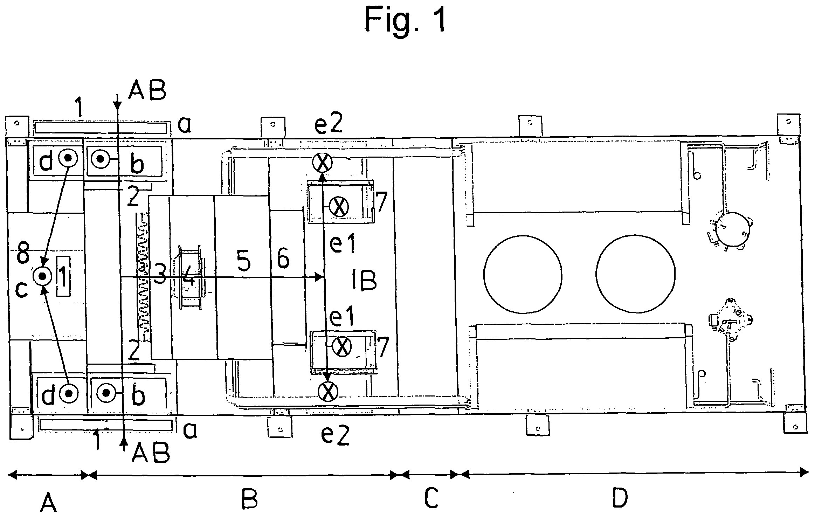

Aus Fig. 1 ist der grundsätzliche Aufbau einer Klimaanlage für ein (nicht gezeigtes) Schienenfahrzeug ersichtlich, die für brennbare Kältemittel der Kategorie A2, A2L und A3 geeignet ist und als ein kompaktes Gerät für eine Montage auf dem Dach des Schienenfahrzeuges ausgestaltet ist. Hierbei sind lediglich die wesentlichen Komponenten der Luftbehandlung ohne das Gehäuse der Klimaanlage dargestellt. Demzufolge weist die Klimaanlage eine optionale Gerätesektion A für Fortluft, eine Gerätesektion B für die Luftbehandlung, einen optionalen elektrischen Schaltkasten C und eine Verdichter- Verflüssiger-Einheit D auf. Die Sektionen B und A können als wesentliche Bauteile Druckwellenventile 1, Mischluftklappen 2 für Außenluft / Umluft, Luftfilter 3, Zuluftventilator 4, Verdampfer 5, Heizregister 6, Zuluftklappen 7 und Fortlüfter 8 wie dargestellt umfassen. Weiterhin sind Schnittstellen zur Außenluftansaugung a, zur Umluftansaugung b, zur Fortluftöffnung c, zur Fortluftansaugung d, zur Zuluftausblasung e1 und zur Zuluftausblasung e 2 vorgesehen.

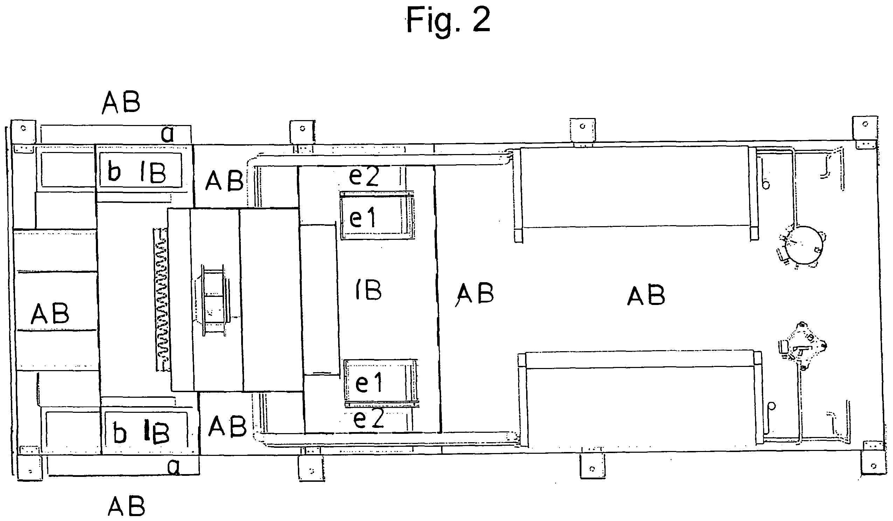

Aus Fig. 2 ist eine Anordnung von mehreren der in Fig. 1 dargestellten Baugruppen innerhalb einer luftdichten Kanalführung im Gehäuse der Klimaanlage ersichtlich. Diese luftdichte Kanalführung ist mit einer etwas stärker gezeichneten und unterbrochenen Linienkontur stilisiert. Demzufolge sind die Mischluftklappen 2 für Außenluft / Umluft, Luftfilter 3, Zuluftklappen 7, Zuluftventilator 4, Verdampfer 5 und Heizregister 6 der Gerätesektion B für die Luftbehandlung sowie deren Schnittstellen zur Außenluftansaugung a und/oder zur Umluftansaugung b und zur Zuluftausblasung e1 und/oder e2 innerhalb der luftdichten Kanalführung im Gehäuse der als ein kompaktes Gerät ausgestalteten Klimaanlage angeordnet. Diesbezüglich bezeichnet das Bezugszeichen AB die zur Kanalführung gesehen äußere Umgebung und das Bezugszeichen IB den zur Kanalführung gesehen inneren Luftbehandlungsbereich, wobei der Bereich AB offen zur Umgebung ist und potentielle Leckagen nach außen abgelüftet bzw. abgeleitet werden und IB den sicheren inneren Bereich darstellt, in dem keine Leckagen zu erwarten sind, da der Verdampfer als sicherer Verdampfer ausgeführt ist.

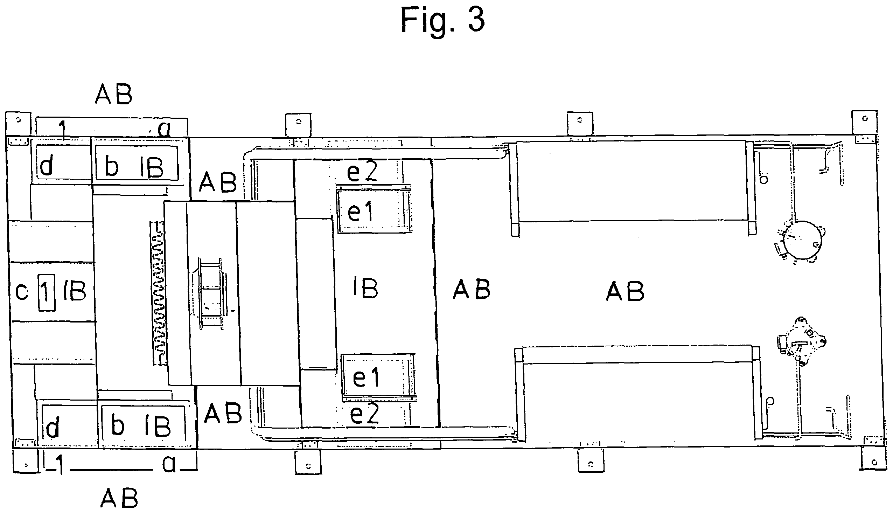

Aus Fig. 3 ist eine modifizierte Ausgestaltung der in Fig. 2 gezeigten Anordnung ersichtlich. Bei dieser Variante ist auch die Gerätesektion A für die Fortluft mit dem Druckwellenventil 1 und deren Schnittstellen zur Fortluftansaugung d und zur Fortluftöffnung c innerhalb einer druckdichten Kanalführung im Gehäuse der Klimaanlage angeordnet. Auch hier ist die druckdichte Kanalführung mit einer etwas stärker gezeichneten und unterbrochenen Linienkontur stilisiert. Ebenso bezeichnet das Bezugszeichen AB die zur Kanalführung gesehen äußere Umgebung und das Bezugszeichen IB den zur Kanalführung gesehen inneren Luftbehandlungsbereich.

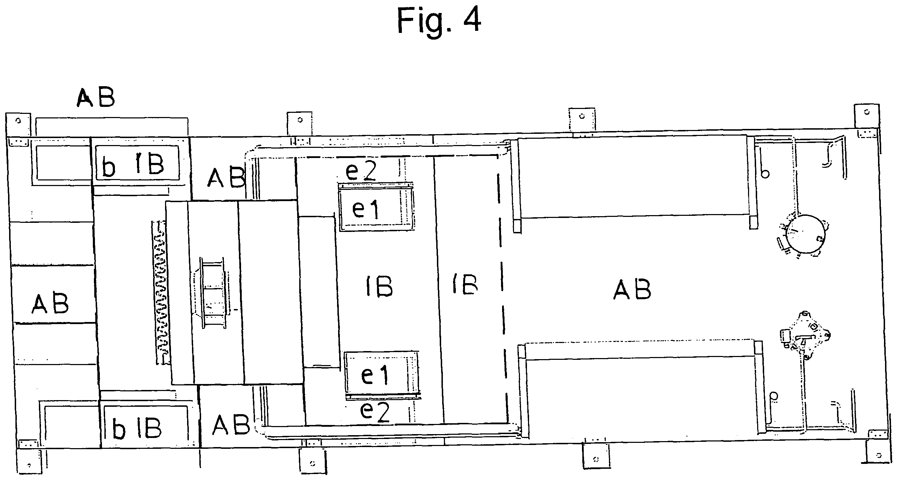

Aus Fig. 4 ist eine modifizierte Ausgestaltung der in Fig. 2 gezeigten Anordnung ersichtlich. Bei dieser Variante ist auch der elektrische Schaltkasten C innerhalb einer luftdichten Kanalführung im Gehäuse der Klimaanlage angeordnet. Auch hier ist die luftdichte Kanalführung mit einer etwas stärker gezeichneten und unterbrochenen Linienkontur stilisiert. Ebenso bezeichnet das Bezugszeichen AB die zur Kanalführung gesehen äußere Umgebung und das Bezugszeichen IB den zur Kanalführung gesehen inneren Luftbehandlungsbereich, wobei der Bereich AB offen zur Umgebung ist und potentielle Leckagen nach außen abgelüftet bzw. abgeleitet werden und IB den sicheren inneren Bereich darstellt, in dem keine Leckagen zu erwarten sind, da der Verdampfer als sicherer Verdampfer ausgeführt ist.

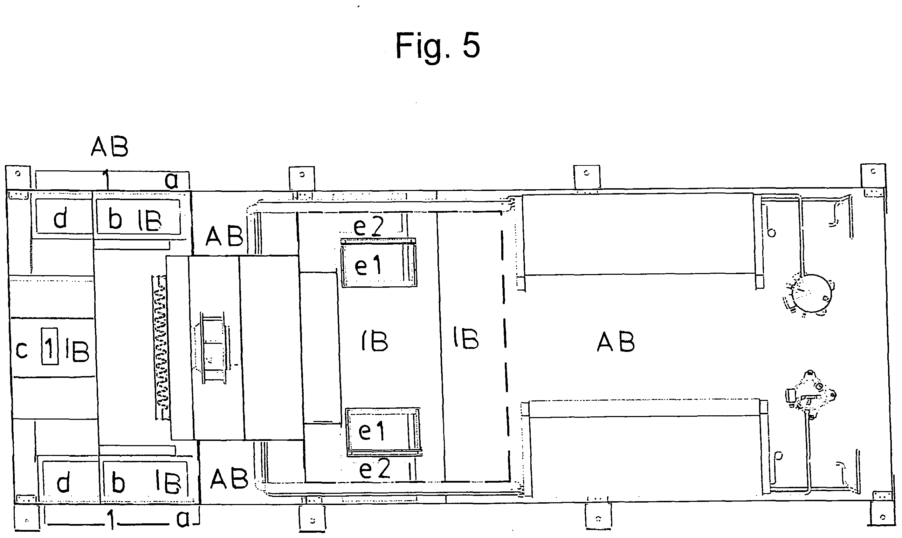

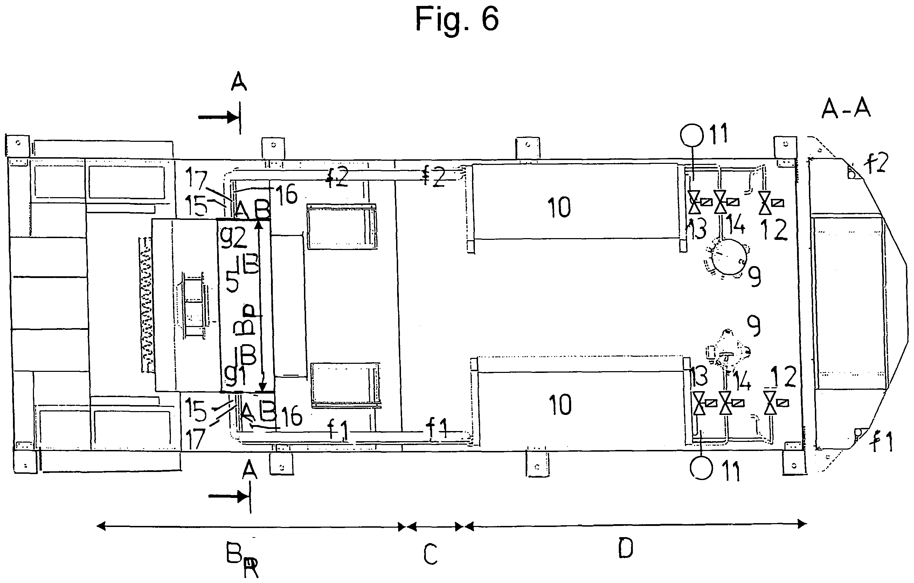

Aus Fig. 5 ist eine zur Fig. 4 nochmals modifizierte Ausgestaltung ersichtlich, indem hier (ähnlich wie in Fig. 3) auch die Gerätesektion A für die Fortluft mit dem Druckwellenventil 1 und deren Schnittstellen zur Fortluftansaugung d und zur Fortluftöffnung c innerhalb einer luft- und druckdichten Kanalführung im Gehäuse der Klimaanlage angeordnet ist. Auch hier ist die luft- und druckdichte Kanalführung mit einer etwas stärker gezeichneten und unterbrochenen Linienkontur stilisiert. Ebenso bezeichnet das Bezugszeichen AB die zur Kanalführung gesehen äußere Umgebung und das Bezugszeichen IB den zur Kanalführung gesehen inneren Luftbehandlungsbereich, wobei der Bereich AB offen zur Umgebung ist und potentielle Leckagen nach außen abgelüftet bzw. abgeleitet werden und IB den sicheren inneren Bereich darstellt, in dem keine Leckagen zu erwarten sind, da der Verdampfer als sicherer Verdampfer ausgeführt ist. Aus Fig. 6 ist ein Beispiel für eine konkrete Anordnung und Ausführung der kältemittelführenden Leitungsabschnitte des Verdampfers 5 ersichtlich. In dieser Fig. 6 sind zwei Kältekreislaufsektionen BP (Rohrbündelpaket Innenseite Verdampfer) und BR (Bereich der Kältekreislaufleitungen in der Luftbehandlungssektion) sowie der elektrische Schaltkasten C und die Verdichter-Verflüssiger-Einheit D dargestellt. Es sind Schnittstellen f1 und f2 vorgesehen für gekammerte Kältemittelleitungen in den Sektionen BR und C und Trennwände g1 und g2 zum dichten Verdampfer. Weiterhin sind als wesentliche Bauteile je Kältekreislauf Verdampfer5, Verdichter 9, Verflüssiger 10, Saugdrucksensor 11, Magnetventil Flüssigkeitsleitung 12, Magnetventil Saugleitung 13, optionales Magnetventil Bypassleitung 14, Saugleitung 15, Flüssigkeitsleitung 16 und optionale Bypassleitung 17 dargestellt

Die begrenzt durch g1 und g2 und im IB befindlichen geraden Rohre des Verdampfers 5 sind die einzigen Komponenten des Kältekreislaufes, die sich im Bereich der luft- oder druckdichten Kanalführung befinden und können bei einer Havarie oder bei einem signifikanten schnellen Druckabfall (große Kältemittelleckage außen oder innen) abgesperrt werden. Damit wird eine weitere Risikominimierung erreicht. Die Absperrung wird realisiert durch Schließen des Magnetventils Flüssigkeitsleitung 12 und der Magnetventile 13 und 14 in der Saugleitung 15 und der Bypassleitung 17. Erweiternd dazu und vor Stillsetzung des Kältekreislaufes kann zusätzlich dieser absperrbare Bereich durch die "Pump out"-Funktion entleert werden. Das "Pump out" erfolgt durch Schließen des Magnetventils Flüssigkeitsleitung 12 und des Magnetventils Bypassleitung 14 bei laufendem Verdichter 9. Damit wird die gesamte Rohrführung vom Magnetventil Flüssigkeitsleitung 12 bis zur Saugseite des Verdichters 9 abgesaugt. Dies betrifft im Einzelnen die Flüssigkeitsleitung 16 nach dem Magnetventil Flüssigkeitsleitung 12 durch die Bereiche f1 und f2, weiter über das Rohrleitungspaket des Verdampfers (BP) zurück über die Saugleitung 15 und Bypassleitung 17 durch die Bereiche f1 und f2. Bei Erreichen eines definierten Saugdruckes wird der Verdichter 9 abgeschaltet und das Magnetventil 13 der Saugleitung 15 geschlossen. Die Lage der Magnetventile 12, 13 und 14 ist lediglich beispielhaft und kann zum Beispiel auch dicht am Verdampfer 5 erfolgen. Erweiternd dazu und nach Stillsetzung und Evakuierung des Kältekreislaufes kann zusätzlich eine Überwachung des Evakuierungsabschnittes durch einen im Evakuierungsbereich befindlichen Saugdrucksensor 11 und der Wiederholung der "Pump out"-Funktion bei Erreichung eines vorgegebenen Druckes im Evakuierungsabschnitt erfolgen. Dabei wird der Druckanstieg mit dem Vorhandensein von Kältemittel im evakuierten Bereich verknüpft. Dadurch wird der Evakuierungszustand des absperrbaren Bereiches zusätzlich überwacht.

## Patentansprüche

1. Klimaanlage für ein Schienenfahrzeug, wobei die Klimaanlage für brennbare Kältemittel der Kategorien A2, A2L, und A3 geeignet und als ein kompaktes Gerät für eine Montage auf einem Fahrzeugdach ausgestaltet ist und mindestens Gerätesektionen für eine Luftbehandlungssektion (B), eine Verdichter-Verflüssiger-Einheit (D) und eine Fortluftsektion (A) aufweist, wobei die Fortluftsektion (A) mindestens erste Schnittstellen zur Fortluftansaugung und zur Fortluftöffnung aufweist und wobei die Luftbehandlungssektion (B) mindestens zweite Schnittstellen zur Außenluftansaugung und zur Umluftansaugung sowie zur Zuluftausblasung, Luftfilter (3), einen Verdampfer (5) und Zuluftventilator (4) und eine Mischluftklappe (2) für Außenluft oder Umluft, Zuluftklappen (7), und ein Heizregister (6) aufweist,
**dadurch gekennzeichnet, dass**
kältemittelführende Baugruppen und Bauteile der Klimaanlage außerhalb der Bereiche der Komfortluftführung liegen und in einem separaten Gehäuse sowie offen zur Umgebung angeordnet sind, wobei zumindest die Mischluftklappe (2) für Außenluft oder Umluft, der Luftfilter (3), die Zuluftklappen (7), der Zuluftventilator (4), der Verdampfer (5), und das Heizregister (6) der Luftbehandlungssektion (B) sowie deren zweite Schnittstellen zur Außenluftansaugung (a) oder zur Umluftansaugung (b) und der Zuluftausblasung (e1 und/oder e2) innerhalb einer luft- oder druckdichten Kanalführung im Gehäuse der als ein kompaktes Gerät ausgestalteten Klimaanlage angeordnet sind.

2. Klimaanlage nach Anspruch 1, **dadurch gekennzeichnet, dass** ein Druckwellenventil (1) der Fortluftsektion (A) und die ersten Schnittstellen zur Fortluftansaugung (d) und zur Fortluftöffnung (c) innerhalb der druckdichten Kanalführung im Gehäuse der Klimaanlage angeordnet sind.

3. Klimaanlage nach einem der Ansprüche 1 oder 2, **dadurch gekennzeichnet, dass** ein elektrischer Schaltkasten (C) innerhalb der luft- oder druckdichten Kanalführung im Gehäuse der Klimaanlage angeordnet ist.

4. Klimaanlage nach mindestens einem der Ansprüche 1 bis 3, **dadurch gekennzeichnet, dass** kältemittelführende Leitungsabschnitte des Verdampfers (5), als einzige Komponente eines Kältemittelkreislaufs in einem Bereich der luft- oder druckdichten Kanalführung angeordnet und absperrbar sind, erweiternd evakuierbar, und erweiternd überwacht evakuiert ausgestaltet sind.

## Claims

1. Air-conditioning system for a rail vehicle, wherein the air-conditioning system is suitable for flammable refrigerants of categories A2, A2L and A3 and is designed in the form of a compact piece of equipment for installation on a vehicle roof and includes at least equipment sections for an air treatment section (B), a compressor-liquefier unit (D) and an outgoing air section (A), wherein the outgoing air section (A) has at least first interfaces to the outgoing air intake and to the outgoing air opening, and wherein the air treatment section (B) has at least second interfaces to the outside air intake and to the ambient air intake, as well as to the supply-air blow-out, air filter (3), an evaporator (5) and supply-air fan (4) and a mixed air flap (2) for outside air or ambient air, supply-air flaps (7), and a heating register (6),
**characterised in that**
refrigerant-carrying assemblies and components of the air-conditioning system are arranged outside the areas of the comfort air circulation and are arranged in a separate housing and in a manner open to the environment, wherein at least the mixed air flap (2) for outside air or ambient air, the air filter (3), the supply-air flaps (7), the supply-air fan (4), the evaporator (5) and the heating register (6) of the air treatment section (B), as well as their second interfaces to the outside air intake (a) or to the ambient air intake (b) and to the supply-air blow-out (e1 and/or e2) are arranged within an air-tight or pressure-tight ducting in the housing of the air-conditioning system designed in the form of a compact piece of equipment.

2. Air-conditioning system according to claim 1, **characterised in that** a pressure wave valve (1) of the outgoing air section (A) and the first interfaces to the outgoing air intake (d) and to the outgoing air opening (c) are arranged within the pressure-tight ducting in the housing of the air-conditioning system.

3. Air-conditioning system according to one of claims 1 or 2, **characterised in that** an electrical switch box (C) is arranged within the air-tight or pressure-tight ducting in the housing of the air-conditioning system.

4. Air-conditioning system according to at least one of claims 1 to 3, **characterised in that** refrigerant-carrying line portions of the evaporator (5), as the only component of a refrigerant circuit, are arranged in an area of the air-tight or pressure-tight ducting and are capable of being shut off, are additionally capable of being evacuated, and are additionally designed to be evacuated in a monitored manner.

## Revendications

1. Installation de climatisation pour un véhicule sur rails, dans laquelle l'installation de climatisation est adaptée pour des agents réfrigérants des catégories A2, A2L, et A3 et est configurée en tant qu'un appareil compact pour un montage sur un toit de véhicule et présente au moins des sections d'appareil pour une section de traitement de l'air (B), une unité de compresseur-condenseur (D) et une section de refoulement d'air (A), dans laquelle la section de refoulement d'air (A) présente au moins des premières interfaces avec l'aspiration d'air de refoulement et l'ouverture d'air de refoulement et dans laquelle la section de traitement de l'air (B) présente au moins des deuxièmes interfaces avec 'aspiration d'air extérieur et avec l'aspiration d'air ambiant ainsi que pour l'évacuation par soufflage de l'air entrant, des filtres à air (3), un évaporateur (5) et un ventilateur d'air entrant (4) et un volet d'air mixte (2) pour de l'air extérieur et de l'air ambiant, des volets d'air entrant (7) et un registre de chauffage (6),
**caractérisée en ce que**
des modules d'acheminement d'agent réfrigérant et des composants de l'installation de climatisation se situent à l'extérieur des zones du guide d'air de confort et sont disposés dans un boîtier séparé ainsi de manière ouverte avec l'environnement, dans laquelle au moins le volet d'air mixte (2) pour l'air extérieur ou l'air environnant, le filtre à air (3), les volets d'air entrant (7), le ventilateur d'air entrant (4), l'évaporateur (5) et le registre de chauffage (6) de la section de traitement d'air (B) ainsi que leur deuxièmes interfaces avec l'aspiration d'air extérieur (a) ou avec l'aspiration d'air ambiant (b) et l'évacuation par soufflage de l'air entrant (e1 et/ou e2) sont disposés à l'intérieur d'un guide de canal étanche à l'air ou à la pression dans le boîtier de l'installation de climatisation configurée en tant qu'un appareil compact.

2. Installation de climatisation selon la revendication 1, **caractérisée en ce qu'**une soupape d'ondes de pression (1) de la section d'air de refoulement (A) et les premières interfaces avec l'aspiration d'air de refoulement (d) et avec l'ouverture d'air de refoulement (c) sont disposés à l'intérieur du guide de canal étanche à la pression dans le boîtier de l'installation de climatisation.

3. Installation de climatisation selon l'une quelconque des revendications 1 ou 2, **caractérisée en ce qu'**un boîtier de commutation électrique (C) est disposé à l'intérieur du guide de canal étanche à l'air ou à la pression dans le boîtier de l'installation de climatisation.

4. Installation de climatisation selon au moins l'une quelconque des revendications 1 à 3, **caractérisée en ce que** des sections d'acheminement guidant l'agent réfrigérant de l'évaporateur (5) sont disposées en tant qu'unique composant d'un circuit d'agent réfrigérant dans une zone du guidage de canal étanche à l'air ou à la pression et peuvent être fermées, sont configurées de manière à pouvoir faire être mises sous vide de manière évasée et dans laquelle le vide est fait de manière surveillée de manière évasée.
